# EUROPÄISCHE PATENTSCHRIFT

(11) **EP 1 413 416 B1**
(45) Veröffentlichungstag und Bekanntmachung des Hinweises auf die Patenterteilung: **23.05.2012**
(21) Anmeldenummer: 03023004.9
(22) Anmeldetag: 11.10.2003
(51) Int. Cl.: B29C 35/08, B05D 3/06, G21K 5/00

(54) **Anlage zum Strahlungshärten**
Radiation hardening installation
Dispositif de durcissage par rayonnement

(30) Priorität: 25.10.2002 DE 10249710; 25.10.2002 DE 10249709
(43) Veröffentlichungstag der Anmeldung: 28.04.2004
(73) Patentinhaber: Air Liquide Deutschland GmbH, 40235 Düsseldorf (DE); Messer Group GmbH, 65812 Bad Soden (DE)
(72) Erfinder: Bergheim, Silke, 29355 Beedenbostel (DE); Herzog, Friedhelm, 47803 Krefeld (DE)
(74) Vertreter: Kahlhöfer, Hermann

(56) Entgegenhaltungen:
- EP-B1- 0 830 217
- DE-A1- 19 916 474
- DE-C1- 19 828 266

## Beschreibung

Die Erfindung betrifft eine Anlage zum Strahlungshärten von Teilen mit einer Strahlapparatur zum Aussenden von Härtestrahlung in Richtung auf einen Bestrahlungsbereich sowie mit einer Inertisierungseinrichtung zur Herstellung einer Inertgasatmosphäre im Bestrahlungsbereich, wobei die Strahlapparatur mit einer Gaskühlung ausgerüstet ist und die Inertisierungseinrichtung eine an eine Inertgaszuleitung angeschlossene Gasdüse aufweist.

Unter Strahlungshärten versteht man die schnelle Umwandlung von Flüssigkeiten, die hauptsächlich aus Monomeren oder Oligomeren bestehen, in feste Polymere durch Ultraviolett- oder Elektronenbestrahlung. Technische Bedeutung erlangt haben bislang insbesondere Acrylsäureester, Epoxy-, Polyester-, Urethan- und Polyether-Acrylate sowie Epoxide und Venylether. Als Quellen für die ultraviolette Strahlung stehen derzeit insbesondere Quecksilber-Mitteldrucklampen oder Exzimerstrahler zur Verfügung. Niederenergie-Elektronenstrahler werden vorwiegend dort eingesetzt, wo dicke und/oder pigmentierte Schichten gehärtet werden müssen.

Seit den Anfängen des Strahlungshärtens ist bekannt, dass Sauerstoff eine Inhibierung bewirkt, welche die Oberflächeneigenschaften beeinträchtigt und zu einer Verlangsamung des Härtungsvorgangs führt. Aus diesem Grunde wurde vorgeschlagen, die Strahlungshärtung unter inerten, d.h. sauerstoffarmen Bedingungen durchzuführen, wobei als Inertgas überwiegend Stickstoff zum Einsatz kommt.

In der Firmenzeitschrift "gas aktuell" **54,** 22 (1998) ist eine Anlage zum Strahlungshärten von Druckfarben beschrieben, bei der die mit der zu härtenden Beschichtung versehenen Druckvorlagen unter inerten Bedingungen einer Bestrahlung mit UV- oder Elektronenstrahlen ausgesetzt werden. Dabei durchfahren die Druckvorlagen eine flache Strahlungskammer, in der eine oder mehrere UV- bzw. Elektronenstrahler angeordnet sind, die in ihrer Breite der Breite der Druckvorlage angepasst sind. Über ein Gasverteilungssystem wird ein Inertgas, etwa Stickstoff, in den Bereich zwischen der Druckvorlage und dem UV- bzw. Elektronenstrahler eingebracht und bildet dort ein Inertgaspolster aus. Da bei der Zuführung der Teile in die Anlage ein Eintrag von Luftsauerstoff unvermeidlich ist, wird der Sauerstoffanteil in der Innenatmosphäre der Anlage laufend überwacht und bei Bedarf Inertgas zugegeben.

Dieser Gegenstand hat sich beim Strahlungshärten im Rollendruckbereich an sich bewährt, weist zugleich jedoch auch den Nachteil auf, dass eine Bestrahlung von dreidimensional ausgedehnten Teilen mit dem vorbekannten Gegenstand nicht möglich ist, da es beim Einfahren der zu härtenden Teile zu einem starken Eintrag von Luftsauerstoff kommen kann.

Um die Überhitzung der UV- bzw. Elektronenstrahler zu vermeiden, werden diese mit einem Kühlmittel, etwa Wasser, Luft oder einem kombinierten System gekühlt. Dies erfolgt in der Regel dadurch, dass das wärmeerzeugende Bauteil, beispielsweise eine Quecksilber-gefüllte Leuchtröhre, unmittelbar vom Kühlmittel umströmt wird. Da während des Prozesses durch Umwandlung des Luftsauerstoffs Ozon entsteht, muss die Kühlluft aus dem Bereich des Strahlers abgezogen werden. Um die Inertisierung im Bestrahlungsbereich nicht zu beeinträchtigen, müssen die Ströme von Kühlmittel und Inertgas getrennt werden. Dies erfolgt insbesondere durch den Einsatz einer Glasplatte zwischen dem Härtestrahler und dem mit Inertgas beströmten Bestrahlungsbereich. Diese Glasplatte mindert jedoch die Strahlungsleistung.

In der DE 199 16 474 A1 wird eine Anlage gemäß dem Oberbegriff des Anspruchs 1, zum Strahlungshärten mit einer Strahlapparatur für flache zu bestrahlenden Teile beschrieben. Hierin wird ein geschlossener Kühlkreislauf um die Strahlungsquelle gezeigt. Über einen Spalt zur Strahlungsquelle zur Gehäusewandung wird das sauerstoffarme Kühlgas zugeführt und durch einen Spalt in dem Hohlspiegel der Strahlungsquelle abgesaugt. Die zu bestrahlenden Teile werden ebenfalls mit dem sauerstoffarmen Kühlgas in Kontakt gebracht und ein übermäßiges Eindringen von Luft wird durch den Überdruck verhindert.

In der DE 198 28 266 C1 wird eine Vorrichtung zum Verhindern von Dampf-, Gas- oder Kleinstpartikelniederschlägen auf den Spiegelelementen von UV-Bestrahlungsvorrichtungen beschrieben. Hierbei wird ausgehend von einer Einspeisung von einem Gas oberhalb der UV-Lichtquelle mit Überdruck zugegeben. Das Gas wird auf das zu härtende flache Substrat aufgebracht und über seitlich angeordnete Unterdruckkammern wieder abgesaugt. In diesen Unterdruckkammer kollidieren der Gasstrom aus der Überdruckkammer und der mitgeführte Luftstrom, wodurch eine laminare Schicht abgelöst und abgesaugt wird.

Aufgabe der vorliegenden Erfindung ist es demnach, eine Anlage zur Strahlungshärtung zu schaffen, bei der bei gleichzeitiger Verbesserung der Strahlungsleistung der Verbrauch an Energie verringert ist.

Gelöst ist diese Aufgabe mit dem Gegenstand des unabhängigen Anspruchs 1.

Erfindungsgemäß wird also während der Bestrahlung Inertgas aus der Gasdüse der Inertisierungseinrichtung in den Bestrahlungsbereich eingedüst und bildet dort eine Gaswolke mit einem stark verminderten Sauerstoffgehalt von beispielsweise 0 bis 15 Vol.-% aus. Die zu bestrahlende Oberfläche eines Teiles wird in den Bereich dieser Inertgaswolke geführt und so unter im wesentlichen inerten Bedingungen bestrahlt. Zugleich ist die Kühlgaszuführung der Gaskühlung mit der Inertgaszuleitung strömungsverbunden, wodurch die Kühlung der Strahlapparatur zumindest teilweise durch das für die Inertisierung des Bestrahlungsbereiches vorgesehene Inertgas erfolgt. Schließlich ergänzt oder ersetzt das durch die Austrittsöffnung der Gaskühlung austretende erwärmte Inertgas die Inertisierung durch die Gasdüse der Inertisierungseinrichtung.

Die Erfindung sieht vor, dass die Gasdüse eine sich zum Bestrahlungsbereich hin öffnende Düsenkammer umfasst, in welcher die Strahlapparatur aufgenommen ist. Diese Ausgestaltung ermöglicht eine gezielte Beströmung des Bestrahlungsbereiches mit Inertgas.

Zumindest eine Innenwandung der Düsenkammer ist beabstandet von einer Außenwand der Strahlapparatur angeordnet und mit Führungselementen zur Herstellung gerichteter Inertgasströme zwischen der Innenwandung der Düsenkammer und der Außenwand der Strahlapparatur versehen. Hierdurch wird eine besonders effiziente Strömungsführung gewährleistet.

Die Erfindung sieht vor, dass die dem Bestrahlungsbereich zugewandte Düsenöffnung der Düsenkammer mit Führungselementen zur Gasführung im Bereich außerhalb der Düsenkammer versehen ist.

Bevorzugt ist die Inertgaszuleitung mit einer Gasversorgung strömungsverbunden, in der Gas im flüssigen oder in gasförmigem Zustand bereitgestellt wird. Die Inertgaszuleitung ist dabei mit Mitteln zur Temperierung des Inertgases ausgerüstet. Bei diesen Mitteln kann es sich um Einrichtungen zum Aufheizen oder zum Kühlen des bereitgestellten Gases handeln, je nachdem, ob das bereitgestellte Gas für die geforderte Lampenkühlung erwärmt oder abgekühlt werden muss.

Im einfachsten Fall handelt es sich bei den Mitteln zur Temperierung des Inertgases um einen Wärmetauscher, der in der Inertgaszuleitung integriert ist. Als ein solcher Wärmetauscher kann auch die Strahlapparatur selbst fungieren. In diesem Fall wird das Inertgas zunächst geschlossen durch die Strahlapparatur geleitet, anschließend dem Wärmetauscher und dann wiederum der Strahlapparatur zugeführt. Auf diese Weise kann eine besonders energiesparende Temperierung des Kühlmittels erreicht werden.

Ein bevorzugtes Mittel zur Temperierung umfasst einen Kaltgasmischer, aus dem ein Kaltgas vorgegebener Temperatur in die Kühlgaszuleitung zuführbar ist. Auf diese Weise kann ein Kühlgas bereitgestellt werden, das für die Kühlung der Strahlapparatur geeignete Eigenschaften aufweist und das zugleich auch die Ausbildung einer Inertgaswolke ermöglicht, durch die der Restsauerstoffgehalt im Bestrahlungsbereich auf das gewünschte Maß reduziert wird.

Die Mittel zur Temperierung des Inertgases umfassen zweckmäßigerweise ein Regelsystem, das die Temperatur und/oder den Volumenstrom des in die Kühlgaszuführung und/oder Inertgaszuführung eingeleiteten Inertgases nach einem vorgegebenem Programm in Abhängigkeit von an Messeinrichtungen festgestellten Parametern, wie Temperatur der Lampe oder Restsauerstoffanteil im Bestrahlungsbereich, regelt. Das Regelsystem ermöglicht die Anpassung der Einleitung an Kühl- bzw. Inertgas an den momentan erforderlichen Bedarf und verringert so weiter den Gasverbrauch.

Um den Eintrag von Sauerstoff aus der Umgebungsatmosphäre weiter zu reduzieren ist es vorteilhaft, die Strahlungsapparatur innerhalb einer Strahlungskammer aufzunehmen, in die beim bestimmungsgemäßen Einsatz die zu härtenden Teile zur Bestrahlung eingebracht werden. Die Strahlkammer kann dabei auch mit Schleuseneinrichtungen ausgerüstet sein, wie sie bei Einrichtungen zur Inertisierung bekannter Stand der Technik darstellen. Die Zuführung der Teile in die Stahlkammer kann dabei automatisch erfolgen, beispielsweise über eine automatische Fördereinrichtung.

Bevorzugt ist die Strahlapparatur manuell und/oder automatisch dreh- oder verschiebbar auf einer Halteeinrichtung aufgenommen. Besonders bevorzugt ist dabei eine Halteeinrichtung, mittels der die Bewegung der Strahlapparatur in drei Dimensionen möglich ist, etwa ein Industrieroboter.

Eine besonders zweckmäßige Ausführungsform der Erfindung sieht vor, dass die Auslassöffnung in wenigstens einer Gasdüse ausmündet. Durch die Gasdüse wird das Inertgas gezielt in bestimmte Teile des Bestrahlungsbereichs eingedüst. Die Gasdüse ist dabei derart ausgebildet, dass ihre Strahlcharakteristik den jeweiligen Inertisierungsanforderungen angepasst ist.

Anhand der Zeichnungen sollen nachfolgend Ausführungsbeispiele der Erfindung näher erläutert werden.

In schematischen Ansichten zeigen:
Fig. 1: Eine Anlage zum Strahlungshärten mit einem Kaltgasmischer in der Inertgasversorgung,
Fig. 2: die Gasdüse einer Inertisierungseinrichtung in perspektivischer Darstellung,
Fig. 3: Eine Anlage zum Strahlungshärten mit einem Kaltgasmischer in der Inertgasversorgung in einer anderen Ausführungsform und
Fig. 4 und 5: Die Anlage nach Fig. 3 mit einer vom Ausführungsbeispiel nach Fig. 3 abweichenden Inertgasversorgungen.

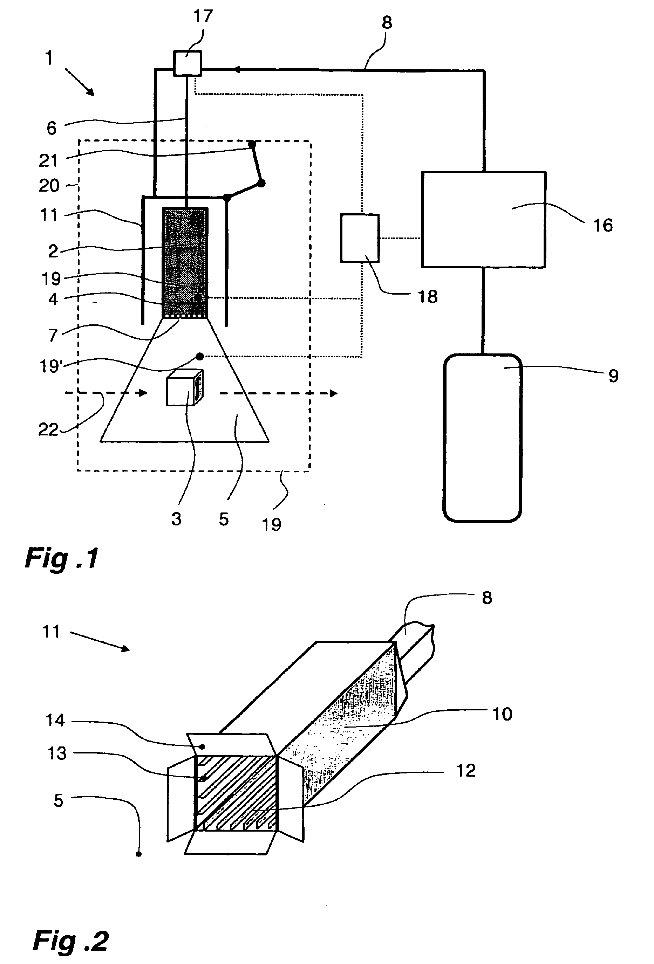

Die in Fig. 1 gezeigte Anlage 1 umfasst eine Strahlapparatur 2 zum Bestrahlen von Gegenständen 3 und dient dazu, die Gegenstände 3, die mit einem strahlungsempfindlichen Lack, Klebstoff oder einer strahlungsempfindlichen Farbe beschichtet wurden, mit Härtestrahlung zu beaufschlagen, wodurch der Lack, Klebstoff bzw. die Farbe schnell und zuverlässig aushärtet.

Die Strahlapparatur 2 beinhaltet einen gasgekühlten Härtestrahler, beispielsweise eine UV-Lampe, wie etwa eine polychromatische Quecksilberlampe oder einen monochromatischen Exzimerstrahler, oder eine Quelle für Elektronenstrahlen. Die Strahlen werden an einer Abstrahlungsseite 4 der Strahlapparatur 2 emittiert und definieren so vor der Abstrahlungsseite 4 einen Bestrahlungsbereich 5, innerhalb dessen eine für die Aushärtung hinreichende Strahlungsintensität vorliegt. Die Gaskühlung der Strahlapparatur erfolgt in der Weise, dass ein Kühlgas auf einer von der Abstrahlungsseite 4 abgewandten Seite an einem Kühlgasanschluss 6 in die Strahlapparatur zugeführt wird, anschließend innerhalb der Strahlapparatur 2 in an sich bekannter Weise den Härtestrahler kühlt und an der Abstrahlungsseite 4 an Austrittsöffnungen 7 aus der Strahlapparatur 2 austritt.

Um einen störenden Einfluss von im Bestrahlungsbereich 5 vorliegendem Luftsauerstoff zu unterbinden, wird der Bestrahlungsbereich 5 ganz oder teilweise mittels eines sauerstoffarmen Gases inertisiert. Hierzu wird ein Inertgas, beispielsweise Stickstoff, Wasserstoff oder ein Edelgas durch eine Zuleitung 8 herangeführt. Als Inertgasquelle dient ein Tank 9, in dem das Inertgas in gasförmigem oder flüssigen Zustand gespeichert wird. Das Inertgas gelangt über die Zuleitung 8 in eine Gasdüse 11, von der aus es in den Bestrahlungsbereich 5 eingedüst wird.

Die Gasdüse 11 umfasst eine Düsenkammer 10 in Form eines zylindrischen Hohlkörpers, die in einer auf den Bestrahlungsbereich 5 gerichteten Mündungsöffnung 12 ausmündet und die an ihrem der Mündungsöffnung 12 entgegengesetzten Ende mit der Zuleitung 8 für Inertgas strömungsverbunden ist. Die Düsenkammer 10 weist innenseitige Umlenkbleche 13 auf, die sich zumindest über einen Teil der Innenwandung des Zylindermantels der Düsenkammer 10 erstrecken und die der Führung des Inertgases innerhalb der Düsenkammer 10 dienen. Im Bereich der Mündungsöffnung 12 sind beim Ausführungsbeispiel nach Fig. 2 zudem außenseitige Umlenkbleche 14 vorgesehen, die der Gasführung im oder zum Bestrahlungsbereich 5 dienen. Beim bestimmungsgemäßen Einsatz der Gasdüse 11 ist die Strahlapparatur 2 derart innerhalb der Düsenkammer 10 aufgenommen, dass zwischen der Außenumrandung der Strahlapparatur 2 und einer sich über die ganze Länge der Düsenkammer 10 hin erstreckenden Innenfläche der Düsenkammer 10 eine Beabstandung besteht, die das Durchströmen von Inertgas aus der Zuleitung 8 zur Mündungsöffnung 12 zulässt. Die Strahlapparatur 2 kann dabei unmittelbar an die innenseitigen Umlenkbleche 13 angrenzen oder von diesen beabstandet aufgenommen sein.

Die Kühlung der Strahlapparatur 2 erfolgt mittels Inertgas, das über die Zuleitung 8 herangeführt wird. Das aus der Zuleitung 8 herangeführte Inertgas wird also zumindest teilweise zur Kühlung der Strahlapparatur 2 eingesetzt. Hierfür ist der Kühlgasanschluss 6 mit der Zuleitung 8 strömungsverbunden. Um die Kühlung der Strahlapparatur 2 zu optimieren, kann sowohl die Temperatur als auch der Volumenstrom des durch den Kühlgasanschluss 6 geführten Inertgases auf zuvor festgelegte oder während des Betriebs der Anlage 1 regelbare Werte eingestellt werden. Zur Einstellung der Temperatur des Inertgases dient eine Einrichtung 16 zur Temperierung. Die Art der Einrichtung 16 richtet sich insbesondere nach der Temperatur des im Tank 9 bereitgestellten Inertgases und nach den Erfordernissen der Kühlung der Strahlungsapparatur 2. Je nach dem kann es sich bei der Einrichtung 16 beispielsweise um einen Kaltgasmischer, eine Heizung oder eine Kältemaschine handeln. Zur Einstellung des durch den Kühlgasanschluss 6 hindurch geführten Volumenstroms dient ein Ventil 17. Zur Regelung der Werte für Temperatur und Volumenstrom des zur Kühlung der Strahlapparatur eingesetzten Inertgases dient eine elektronische Steuereinheit 18. Hierzu werden mit Hilfe von Messfühlern 19, 19' Parameter, die für die Kühlung der Strahlapparatur 2 und/oder die Inertisierung des Bestrahlungsbereiches 5 relevant sind, wie etwa die Temperatur innerhalb der Strahlapparatur 2 (Messfühler 19) oder dem Sauerstoffanteil in der Atmosphäre des Bestrahlungsbereiches 5 (Messfühler 19'), gewonnen und der Steuereinheit 18 zugeleitet. Die Steuereinheit 18 ermittelt dann aus den so gewonnenen Daten die erforderlichen Werte für Temperatur und Volumenstrom des Kühlgases und sendet entsprechende Steuerbefehle an die Einrichtung 16 und/oder das Ventil 17. Auf diese Weise können Kühlung und Inertisierung optimiert werden.

Um den Eintrag von Luftsauerstoff weiter zu reduzieren, ist im Ausführungsbeispiel die Strahlapparatur 2 innerhalb einer - mit Ausnahme von Transportöffnungen für die Gegenstände 3 - im wesentlichen gasdicht abgeschlossenen Strahlungskammer 20 aufgenommen, die in der Zeichnung durch eine gestrichelte Linie lediglich angedeutet ist. Die Strahlapparatur 2 ist an einem beweglichen Arm 21 befestigt und kann so in drei Dimensionen um den zu bestrahlenden Gegenstand 3 herum geführt werden. Der Arm 21 kann in hier nicht gezeigter Weise von einer von einer Zentrale aus ferngesteuert oder nach einem eingegebenem Programm in Abhängigkeit von der jeweils zu bestrahlenden Oberfläche bewegt werden. Bei dem Arm 21 handelt es sich insbesondere um einen Teil eines Industrieroboters. Es ist im Rahmen der Erfindung auch möglich, bei fest stehender Strahlapparatur mittels einer geeigneten Vorrichtung einen zu behandelnden Gegenstand entsprechend in drei Dimensionen zu bewegen.

Als Inertgas kommt bevorzugt Stickstoff, Kohlendioxid, ein Edelgas oder ein Gasgemisch aus diesen Gasen zum Einsatz. Dieses Gas wird im Tank 9 in flüssiger Form oder als kaltes Gas bereitgestellt und in der Einrichtung 16 auf die gewünschte Temperatur gebracht.

Beim bestimmungsgemäßen Einsatz der Anlage 1 werden die Gegenstände 3 mittels einer hier nicht gezeigten Transporteinrichtung - wie durch einen Pfeil 22 angedeutet - in das Innere der Strahlkammer 20 eingebracht und mit Strahlen, etwa ultraviolettes Licht oder Elektronenstrahlen, bestrahlt, die von der Strahlapparatur 2 emittiert werden. Durch die Bestrahlung werden auf der Oberfläche des Gegenstandes 3 aufgetragene Beschichtungen, insbesondere fotosensitive Farben oder Lacke, gehärtet. Die Strahlapparatur 2 wird dabei zumindest zum Teil in der oben beschriebenen Weise mittels des Inertgases gekühlt. Ergänzend zu der oben beschriebenen Inertgaskühlung kann eine weitere Kühlung, etwa eine Wasserkühlung oder eine Gaskühlung mit separatem Kühlgaskreislauf, zum Einsatz kommen. Anstelle einer einzelnen Strahlapparatur 2 können auch mehrere Strahlapparaturen zum Einsatz kommen, die alle oder zum Teil innerhalb der Gasdüse 11 aufgenommen sind. So ist beispielsweise vorstellbar, dass mehrere Strahler aus verschiedenen Richtungen auf die Oberfläche des Gegenstandes 3 einstrahlen, oder der Gegenstand 3 kann mit unterschiedlichen Strahlungsarten beaufschlagt werden.

Die Anlage 1 eignet sich zur Strahlungshärtung für Beschichtungen von Gegenständen 3 mit einer beliebigen dreidimensionalen Oberflächenstruktur, jedoch ist die Anlage 1 auch zur Strahlungshärtung von flachen Teilen geeignet, etwa Papier- oder Kunststoffrollen. Die Doppelnutzung des Inertgases sowohl für die Kühlung der Strahlapparatur 2 als auch für die Inertisierung des Bestrahlungsbereiches 5 führt zu einem stark reduzierten Energieverbrauch. Dadurch, dass keine separaten Strömungsführungen für das Kühlgas bzw. das Inertgas erforderlich ist, wird ist die Anlage 1 einfach im Aufbau, was zur Verringerung von Gewicht und Volumen und damit zur der Möglichkeit führt, die Strahlapparatur 2 im Industrieroboterbetrieb einzusetzen.

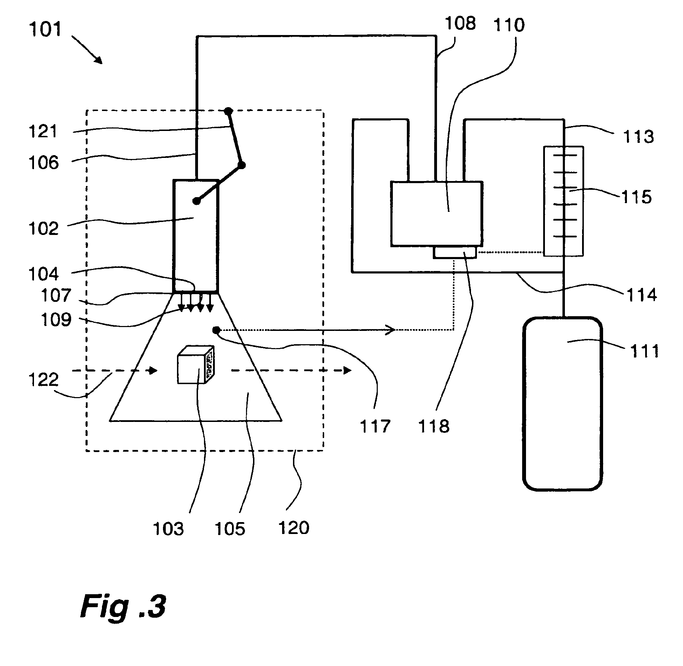

Die in Fig. 3 gezeigte Anlage 101 umfasst - ähnlich wie die Anlage nach Fig. 1 - eine Strahlapparatur 102 zum Bestrahlen von Gegenständen 3, die einen zur Strahlapparatur 2 nach Fig. 1 gleichen Aufbau aufweist. Die Strahlapparatur 102 wird mittels einer Gaskühlung gekühlt, und zwar derart, dass ein Kühlgas auf einer von einer Abstrahlungsseite 104 abgewandten Seite an einem Kühlgasanschluss 106 in die Strahlapparatur 102 zugeführt wird, anschließend innerhalb der Strahlapparatur 102 in an sich bekannter Weise den Härtestrahler kühlt und an der Abstrahlungsseite 104 an Gasdüsen 107 aus deren Mündungsöffnungen 109 austritt.

Um einen störenden Einfluss von im Bestrahlungsbereich 105 vorliegendem Luftsauerstoff zu unterbinden, wird der Bestrahlungsbereich 105 ganz oder teilweise mittels eines sauerstoffarmen Gases inertisiert. Die Bereitstellung des Inertgases erfolgt erfindungsgemäß über einen Kühlgasanschluss 106 der Strahlungsapparatur 102. Hierzu ist der Kühlgasanschluss 106 über eine Zuleitung 108 mit einem Kaltgasmischer 110 für Inertgas, im Ausführungsbeispiel für Stickstoff, strömungsverbunden. Der Kaltgasmischer 110 bezieht das Inertgas aus einem Flüssig- oder Kaltgastank 111 über zwei Zuleitungen 113, 114. Während die Zuleitung 114 das Inertgas dem Kaltgasmischer 110 mit einer tiefen Temperatur zuführt, durchläuft das Gas in der Zuleitung 113 einen Wärmetauscher 115, in dem das Gas durch thermischen Kontakt mit einem Wärmeträger, beispielsweise Luft, auf eine vorgegebene Temperatur aufgeheizt wird. Die beiden Teilströme der Zuleitungen 113, 114 werden im Kaltgasmischer 110 durchmischt und mit einem vorgegebenem Volumenstrom über die Zuleitung 108 dem Kühlgasanschluss 106 zugeführt. Das Inertgas wird in der Strahlapparatur 102 zur Kühlung des Härtestrahlers genutzt, entweicht anschließend aus den Gasdüsen 107 und bildet innerhalb des Bestrahlungsbereichs 105 - vorzugsweise im Bereich von etwa 10cm bis 20 cm vor der Abstrahlungsseite 104 - eine Inertgaswolke aus. Die Gasdüsen 107 sind dabei bevorzugt so gestaltet, dass in Bezug auf die jeweilige Geometrie der zu härtenden Teile eine möglichst effektive Inertisierung bewirkt wird. Insgesamt besteht die Forderung, dass die an die zu härtende Fläche angrenzende Atmosphäre einen Sauerstoffanteil von weniger als 15 Vol.-% aufweist. Reicht das zu Kühlung eingesetzte Inertgas nicht aus, im in Bezug auf die zu härtenden Teile eine hinreichende Inertisierung zu bewirken, kann eine zusätzliche, separate Inertisierungseinrichtung zum Einsatz kommen.

Die Temperatur, auf die der durch die Zuleitung 113 geführte Teilstrom im Wärmetauscher 115 erwärmt wird, das Volumenverhältnis der Teilströme in den Zuleitungen 113 und 114 zueinander, sowie der Volumenstrom in der Zuleitung 108 lassen sich dabei auf bestimmte, vorgegebene Werte einstellen. Die Werte richten sich dabei nach der erforderlichen Kühlleistung zur Kühlung des Härtestrahlers und/oder nach der geforderten Geometrie und/oder chemischen Zusammensetzung der Inertgaswolke. Es ist auch möglich, diese Größen als Regelgrößen einzusetzen. Dazu werden mithilfe von Messfühlern 117 physikalische oder chemische Parameter, beispielsweise die Temperatur des Strahlers, der Kühlgas-Volumenstrom durch die Lampe oder dem Restsauerstoffanteil in der Inertgaswolke, kontinuierlich oder in vorgegebenen Zeitabständen erfasst und einer Regeleinrichtung 118 übermittelt. Die Regeleinrichtung 118 ermittelt dann nach einem vorgegebenen Programm für den jeweiligen Betriebszustand geeignete Werte für die Volumenströme bzw. die Temperatur des zugeführten Kühlgases und gibt entsprechende Steuerbefehle an den Kaltgasmischer 110 bzw. an den Wärmetauscher 115.

Um den Eintrag von Luftsauerstoff weiter zu reduzieren, ist im Ausführungsbeispiel die Strahlapparatur 102 innerhalb einer - mit Ausnahme von Zuführungen für die Gegenstände 103 - im wesentlichen gasdicht abgeschlossenen Strahlungskammer 120 aufgenommen, die in der Zeichnung durch eine gestrichelte Linie lediglich angedeutet ist. Die Strahlapparatur 102 ist an einem beweglichen Arm 121 befestigt und kann so in drei Dimensionen um den zu bestrahlenden Gegenstand 103 herum geführt werden. Der Arm 121 kann in hier nicht gezeigter Weise von einer von einer Zentrale aus ferngesteuert oder nach einem eingegebenem Programm in Abhängigkeit von der jeweils zu bestrahlenden Oberfläche bewegt werden. Bei dem Arm 121 handelt es sich insbesondere um einen Teil eines Industrieroboters. Es ist im Rahmen der Erfindung auch vorstellbar, bei fest stehender Strahlapparatur mittels einer geeigneten Vorrichtung den Gegenstand entsprechend in drei Dimensionen zu bewegen.

Als Inertgas kommt beispielsweise Stickstoff, Kohlendioxid, ein Edelgas oder ein Gasgemisch, das diese Gase enthält, zum Einsatz. Dieses Gas wird im Tank 111 in flüssiger Form oder als kaltes Gas bereitgestellt und im Kaltgasmischer 110 auf die gewünschte Temperatur erwärmt.

Beim bestimmungsgemäßen Einsatz der Anlage 101 werden die Gegenstände 103 mittels einer hier nicht gezeigten Transporteinrichtung - wie durch den Pfeil 122 angedeutet - in das Innere der Strahlkammer 120 eingebracht und mit Strahlen, etwa ultraviolettes Licht oder Elektronenstrahlen, bestrahlt, die vom Härtestrahler der Strahlapparatur 102 emittiert werden. Dabei werden auf den Oberfläche des Gegenstandes 103 aufgetragene Beschichtungen, insbesondere fotosensitive Farben oder Lacke, gehärtet. Anstelle eines einzelnen Härtestrahlers können auch mehrere Strahler zum Einsatz kommen, die gleichzeitig oder nacheinander betätigt werden. So ist beispielsweise vorstellbar, das mehrere Strahler aus verschiedenen Richtungen auf die Oberfläche des Gegenstandes 103 einstrahlen, oder der Gegenstand 103 kann mit unterschiedlichen Strahlungsarten beaufschlagt werden. Die Strahlapparatur 102 wird dabei zumindest zum Teil in der oben beschriebenen Weise durch das zugeführte Inertgas gekühlt. Ergänzend zu dieser Inertgaskühlung kann jedoch auch eine weitere Kühlung, beispielsweise eine Wasserkühlung oder eine Gaskühlung mit separatem Kühlgaskreislauf, zum Einsatz kommen.

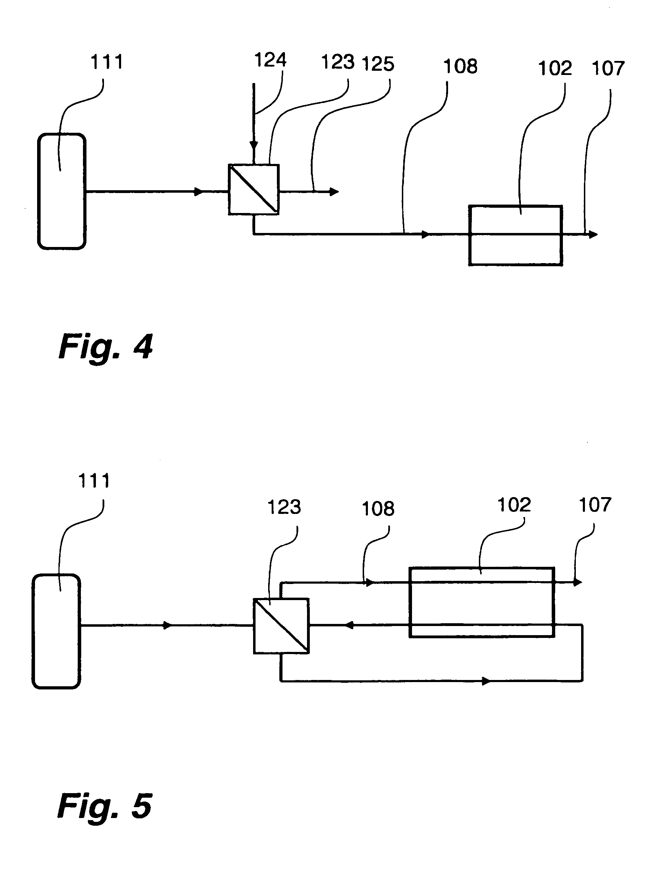

In den Fig. 4 und 5 sind Ausführungsbeispiele der Erfindung gezeigt, bei denen anstelle eines Kaltgasmischers andere Möglichkeiten zur Temperierung des Kühl- bzw. Inertgases zum Einsatz kommen.

Beim Ausführungsbeispiel nach Fig. 4 ist in der Inertgaszuleitung 108 ein Wärmetauscher vorgesehen, mittels dessen eine Temperierung des durch die Inertgaszuleitung 108 geführten Gases auf eine vorgegebene Temperatur erreicht wird. Die Regelung der Temperatur in der Inertgaszuleitung 108 erfolgt in bekannter und hier nicht gezeigter Weise mittels eines Temperaturmessfühlers in der Inertgaszuleitung 108, dessen Messwerte zur Einstellung der entsprechenden Parameter des durch die Zuleitung 124 herangeführten und durch die Ableitung 125 abgeführten Wärmeübertragungsmediums benutzt werden. Das entsprechend temperierte Inertgas wird der Strahlapparatur zur Kühlung zugeführt und entweicht anschließend in der oben beschriebenen Weise aus den Gasdüsen 107. Je nachdem, ob das aus der Gasversorgung 111 herangeführte Gas zur Kühlung der Strahlungsapparatur gekühlt oder erwärmt werden muss, dient das Wärmeübertragungsmedium als Kühl- oder als Heizmittel. So kann beispielsweise in Produktionsstätten, in denen sauerstoffarmes Gas als warmes Prozessgas anfällt, dieses Gas zur Kühlung einer Strahlapparatur und zur Inertisierung genutzt werden.

Anstelle eines Wärmetauschers 123 kann auch eine Heizeinrichtung bzw. eine Kühleinrichtung, wie beispielsweise eine Kältemaschine, zum Einsatz kommen.

Beim Ausführungsbeispiel nach Fig. 5 kommt das in der Strahlapparatur 102 erwärmte Inertgas im Wärmetauscher 123 als Wärmeübertragungsmedium zum Einsatz, um da aus der Gasversorgung 111 im flüssigen Zustand herangeführte Inertgas zu verdampfen. Gleichzeitig wird die Verdampfungswärme zur Kühlung des Inertgases dazu genutzt, das aus der Strahlapparatur 102 kommende Gas abzukühlen und erneut zur Kühlung der Strahlapparatur einzusetzen. Die Temperaturregelung erfolgt in diesem Ausführungsbeispiel über die Kontrolle der Menge des durch die Inertgaszuleitung 108 hindurch geleiteten Gases. Eine solche Strömungsführung ist besonders energiesparend.

### Bezugszeichenliste

- 1.: Anlage
- 2.: Strahlapparatur
- 3.: Gegenstand
- 4.: Abstrahlseite
- 5.: Bestrahlungsbereich
- 6.: Kühlgasanschluss
- 7.: Austrittsöffnungen
- 8.: Zuleitung
- 9.: Gastank
- 10.: Düsenkammer
- 11.: Gasdüse
- 12.: Mündungsöffnung
- 13.: innenseitige Umlenkbleche
- 14.: außenseitige Umlenkbleche
- 15.: -
- 16.: Einrichtung zur Temperierung
- 17.: Ventil
- 18.: elektronische Steuereinheit
- 19, 19': Messfühler
- 20.: Strahlungskammer
- 21.: beweglicher Arm
- 22.: Pfeil
- 101.: Anlage
- 102.: Strahlapparatur
- 103.: Gegenstand
- 104.: Abstrahlungsseite
- 105.: Bestrahlungsbereich
- 106.: Kühlgaseinlass
- 107.: Gasdüse
- 108.: Zuleitung
- 109.: Mündungsöffnung
- 110.: Kaltgasmischer
- 111.: Tank
- 112.: -
- 113.: Zuleitung
- 114.: Zuleitung
- 115.: Wärmetauscher
- 116.: -
- 117: Messfühler
- 118.: Regeleinrichtung
- 119.: -
- 120.: Strahlungskammer
- 121.: Arm
- 122.: Pfeil
- 123.: Wärmetauscher
- 124.: Zuleitung
- 125.: Ableitung

## Patentansprüche

1. Anlage zum Strahlungshärten von Teilen (3,103) mit einer Strahlapparatur (2,102) zum Aussenden von Härtestrahlung in Richtung auf einen Bestrahlungsbereich (5,105) sowie mit einer Inertisierungseinrichtung zur Herstellung einer Inertgasatmosphäre im Bestrahlungsbereich (5,105), wobei die Strahlapparatur (2,102) mit einer Gaskühlung ausgerüstet ist und die Inertisierungseinrichtung eine an eine Inertgaszuleitung (8,108) angeschlossene Gasdüse (11,107) aufweist, wobei
die Gaskühlung mit der Inertgaszuleitung (8,108) strömungsverbunden ist und wenigstens eine mit der Gasdüse (11,107) der Inertisierungseinrichtung zusammenwirkende Auslassöffnung (7,109) für erwärmtes Kühlgas aufweist, **dadurch gekennzeichnet,**
**dass** die Gasdüse (11) eine sich zum Bestrahlungsbereich (5) hin öffnende Düsenkammer (10) umfasst, in welcher die Strahlapparatur (2) aufgenommen ist,
**dass** zumindest eine Innenwandung der Düsenkammer (10) beabstandet von einer Außenwand der Strahlapparatur (2) angeordnet und mit Führungselementen (13) zur Herstellung gerichteter Inertgasströme zwischen der Innenwandung der Düsenkammer (10) und der Außenwand der Strahlapparatur (2) versehen ist, und
**dass** die dem Bestrahlungsbereich (5) zugewandte Düsenöffnung (12) der Düsenkammer (10) mit Führungselementen (14) zur Gasführung im Bereich außerhalb der Gasdüse (11) versehen ist.

2. Anlage nach einem der vorhergehenden Ansprüche, **dadurch gekennzeichnet, dass** die Inertgaszuleitung (8) mit Mitteln (16) zur Temperierung des von der Gasversorgung (9) im flüssigen oder gasförmigem Zustand bereitgestellten Inertgases ausgerüstet ist.

3. Anlage nach einem der vorhergehenden Ansprüche, **dadurch gekennzeichnet, dass** die Mittel (16) zur Temperierung des Inertgases wenigstens einen in der Inertgaszuleitung (8) integrierten Wärmetauscher umfassen.

4. Anlage nach einem der vorhergehenden Ansprüche, **dadurch gekennzeichnet, dass** in dem Wärmetauscher in der Strahlapparatur (2) erzeugte Wärme zur Aufheizung des Inertgases einsetzbar ist.

5. Anlage nach einem der vorhergehenden Ansprüche, **dadurch gekennzeichnet, dass** die Mittel (16) zur Temperierung des Gases einen Kaltgasmischer umfassen, aus dem ein Kaltgas vorgegebener Temperatur und vorgegebenem Volumenstrom in eine Kühlgaszuführung (6) der Gaskühlung zuführbar ist.

6. Anlage nach einem der vorhergehenden Ansprüche, **dadurch gekennzeichnet, dass** die Mittel (16) zur Temperierung des Inertgases mit einem Regelsystem (18) ausgerüstet sind, das die Temperatur und/oder den Volumenstrom des in die Kühlgaszuführung (6) und/oder Inertgaszuführung (8) eingeleiteten Inertgases nach einem vorgegebenem Programm im Abhängigkeit von an Messeinrichtungen (19) festgestellten Parametern, wie Temperatur der Strahlapparatur (2) oder Restsauerstoffanteil im Bestrahlungsbereich (5), regelt.

7. Anlage nach einem der vorhergehenden Ansprüche, **dadurch gekennzeichnet, dass** die Strahlapparatur (2) in einer Strahlungskammer (20) aufgenommen ist, in die die zu härtenden Teile (3) einbringbar und unter zumindest weitgehender Fernhaltung von Umgebungsluft bestrahlbar sind.

8. Anlage nach einem der vorhergehenden Ansprüche, **dadurch gekennzeichnet, dass** die Strahlapparatur (2) manuell und/oder automatisch bewegbar auf einer Halteeinrichtung (21), etwa einem Industrieroboter, aufgenommen ist.

9. Anlage nach einem der vorhergehenden Ansprüche, **dadurch gekennzeichnet, dass** die Auslassöffnung in wenigstens einer Gasdüse (7) ausmündet, die in ihrer Strahlcharakteristik den jeweiligen Inertisierungsanforderungen angepasst ist.

## Claims

1. Installation for the radiation curing of parts (3, 103), comprising a radiation apparatus (2, 102) for emitting curing radiation in the direction of an irradiation region (5, 105) and also comprising an inerting device for producing an inert gas atmosphere in the irradiation region (5, 105), wherein the radiation apparatus (2, 102) is equipped with a gas cooling system and the inerting device has a gas nozzle (11, 107) which is connected to an inert gas supply line (8, 108), wherein
the gas cooling system is fluidically connected to the inert gas supply line (8, 108) and has at least one outlet opening (7, 109), which interacts with the gas nozzle (11, 107) of the inerting device, for heated cooling gas,
**characterized**
**in that** the gas nozzle (11) comprises a nozzle chamber (10), which opens towards the irradiation region (5) and in which the radiation apparatus (2) is accommodated,
**in that** at least one inner wall of the nozzle chamber (10) is arranged spaced apart from an outer wall of the radiation apparatus (2) and is provided with guide elements (13) for producing directional streams of inert gas between the inner wall of the nozzle chamber (10) and the outer wall of the radiation apparatus (2), and in that the nozzle opening (12) of the nozzle chamber (10), which nozzle opening faces towards the irradiation region (5), is provided with guide elements (14) for guiding gas in the region outside the gas nozzle (11).

2. Installation according to Claim 1, **characterized in that** the inert gas supply line (8) is equipped with means (16) for controlling the temperature of the inert gas provided by the gas supply system (9) in a liquid or gaseous state.

3. Installation according to either of the preceding claims, **characterized in that** the means (16) for controlling the temperature of the inert gas comprise at least one heat exchanger integrated in the inert gas supply line (8).

4. Installation according to one of the preceding claims, **characterized in that** heat generated in the heat exchanger in the radiation apparatus (2) can be used for heating the inert gas.

5. Installation according to one of the preceding claims, **characterized in that** the means (16) for controlling the temperature of the gas comprise a cold-gas mixer, from which a cold gas at a predefined temperature and at a predefined volumetric flow rate can be fed into a cooling gas feed system (6) of the gas cooling system.

6. Installation according to one of the preceding claims, **characterized in that** the means (16) for controlling the temperature of the inert gas are equipped with a control system (18), which controls the temperature and/or the volumetric flow rate of the inert gas fed into the cooling gas feed system (6) and/or inert gas feed system (8) in accordance with a predefined programme depending on parameters ascertained at measuring devices (19), such as the temperature of the radiation apparatus (2) or residual oxygen content in the irradiation region (5).

7. Installation according to one of the preceding claims, **characterized in that** the radiation apparatus (2) is accommodated in a radiation chamber (20), into which the parts (3) to be cured can be introduced and in which said parts can be irradiated with ambient air being kept at least largely away.

8. Installation according to one of the preceding claims, **characterized in that** the radiation apparatus (2) is accommodated in a manually and/or automatically movable manner on a retaining device (21), for example an industrial robot.

9. Installation according to one of the preceding claims, **characterized in that** the outlet opening opens out in at least one gas nozzle (7) which is adapted, in terms of the radiation characteristics thereof, to the respective inerting requirements.

## Revendications

1. Installation de durcissement par rayonnement de pièces (3, 103) comprenant un appareil à rayonnement (2, 102) pour émettre des rayonnements de durcissement dans la direction d'une zone d'irradiation (5, 105) et comprenant un dispositif d'inertisation pour créer une atmosphère de gaz inerte dans la zone d'irradiation (5, 105), l'appareil à rayonnement (2, 102) étant équipé d'un refroidissement à gaz et le dispositif d'inertisation présentant une buse à gaz (11, 107) raccordée à une conduite d'alimentation de gaz inerte (8, 108), le refroidissement à gaz étant connecté fluidiquement à la conduite d'alimentation de gaz inerte (8, 108) et présentant au moins une ouverture de sortie (7, 109) pour le gaz de refroidissement chauffé, coopérant avec la buse à gaz (11, 107) du dispositif d'inertisation,
**caractérisée en ce que**
la buse à gaz (11) comprend une chambre de buse (10) s'ouvrant vers la zone d'irradiation (5), dans laquelle chambre de buse est reçu l'appareil à rayonnement (2),
**en ce qu'**au moins une paroi interne de la chambre de buse (10) est disposée à distance d'une paroi extérieure de l'appareil à rayonnement (2) et est pourvue d'éléments de guidage (13) pour créer des jets de gaz inerte orientés entre la paroi intérieure de la chambre à buse (10) et la paroi extérieure de l'appareil à rayonnement (2), et **en ce que** l'ouverture de buse (12) de la chambre de buse (10) tournée vers la zone d'irradiation (5) est pourvue d'éléments de guidage (14) pour guider le gaz dans la région hors de la buse à gaz (11).

2. Installation selon la revendication 1, **caractérisée en ce que** la conduite d'alimentation de gaz inerte (8) est équipée de moyens (16) pour équilibrer la température du gaz inerte fourni par l'alimentation en gaz (9) à l'état liquide ou gazeux.

3. Installation selon l'une quelconque des revendications précédentes, **caractérisée en ce que** les moyens (16) pour équilibrer la température du gaz inerte comprennent au moins un échangeur de chaleur intégré dans la conduite d'alimentation de gaz inerte (8).

4. Installation selon l'une quelconque des revendications précédentes, **caractérisée en ce que** la chaleur produite dans l'échangeur de chaleur dans l'appareil à rayonnement (2) peut être utilisée pour le chauffage du gaz inerte.

5. Installation selon l'une quelconque des revendications précédentes, **caractérisée en ce que** les moyens (16) pour équilibrer la température du gaz comprennent un mélangeur de gaz froid, depuis lequel un gaz froid à une température prédéfinie et à un débit volumique prédéfini peut être acheminé dans une alimentation en gaz froid (6) du système de refroidissement à gaz.

6. Installation selon l'une quelconque des revendications précédentes, **caractérisée en ce que** les moyens (16) pour équilibrer la température du gaz inerte sont équipés d'un système de régulation (18) qui régule la température et/ou le débit volumique du gaz inerte introduit dans l'alimentation en gaz froid (6) et/ou dans l'alimentation en gaz inerte (8) selon un programme prédéfini en fonction de paramètres établis au niveau de dispositifs de mesure (19), comme la température de l'appareil à rayonnement (2), ou la proportion d'oxygène résiduel dans la zone d'irradiation (5).

7. Installation selon l'une quelconque des revendications précédentes, **caractérisée en ce que** l'appareil à rayonnement (2) est reçu dans une chambre à rayonnement (20) dans laquelle les pièces à durcir (3) peuvent être introduites et peuvent être irradiées en les maintenant autant que possible à l'écart de l'air ambiant.

8. Installation selon l'une quelconque des revendications précédentes, **caractérisée en ce que** l'appareil à rayonnement (2) est reçu de manière déplaçable manuellement et/ou automatiquement sur un dispositif de retenue (21), par exemple un robot industriel.

9. Installation selon l'une quelconque des revendications précédentes, **caractérisée en ce que** l'ouverture de sortie débouche dans au moins une buse à gaz (7) qui est adaptée par ses caractéristiques d'irradiation aux exigences d'inertisation respectives
